# EUROPÄISCHE PATENTSCHRIFT

(11) **EP 1 196 452 B1**
(45) Veröffentlichungstag und Bekanntmachung des Hinweises auf die Patenterteilung: **08.06.2005**
(21) Anmeldenummer: 00949178.8
(22) Anmeldetag: 13.06.2000
(51) Int. Cl.: C08F 4/60, C08F 4/80, C08F 4/26, C08F 4/70

(54) **VERFAHREN ZUR COPOLYMERISATION VON POLAREN UND UNPOLAREN MONOMEREN**
METHOD FOR COPOLYMERIZING POLAR AND NON-POLAR MONOMERS
PROCEDE DE COPOLYMERISATION DE MONOMERES POLAIRES ET NON POLAIRES

(30) Priorität: 25.06.1999 DE 19929131; 25.08.1999 US 150634 P
(43) Veröffentlichungstag der Anmeldung: 17.04.2002
(73) Patentinhaber: Bayer Aktiengesellschaft, 51368 Leverkusen (DE)
(72) Erfinder: SCHERTL, Peter, D-51373 Leverkusen (DE); HOCH, Martin, D-42657 Solingen (DE); ARNDT-ROSENAU, Michael, D-22523 Hamburg (DE); PYRLIK, Oliver, D-20253 Hamburg (DE); GUILLEMOT, Maud, D-20144 Hamburg (DE)
(86) Internationale Anmeldenummer: PCT/EP2000/005413
(87) Internationale Veröffentlichungsnummer: WO 2001/000686

(56) Entgegenhaltungen:
- WO-A-99/12981
- US-A- 3 700 648
- US-A- 3 755 275
- DATABASE WPI Section Ch, Week 198443 Derwent Publications Ltd., London, GB; Class A14, AN 1984-267165 XP002150679 & JP 59 164303 A (DAINIPPON INK & CHEM KK) , 17. September 1984 (1984-09-17)
- CHEMICAL ABSTRACTS, vol. 109, no. 6, 8. August 1988 (1988-08-08) Columbus, Ohio, US; abstract no. 38308, POTTS, KEVIN T. ET AL: "Polymers and polymer-metal complexes containing pendent 2,2':6',2"-terpyridinyl ligands" XP002150678 & MACROMOLECULES (1988), 21(7), 1985-91 ,

## Beschreibung

Gegenstand der Erfindung ist ein Verfahren zur Copolymerisation von polaren und unpolaren Monomeren, ein hierfür geeignetes Katalysatorsystem enthaltend eine oder mehrere Übergangsmetallverbindungen der Gruppe 5-10 des Periodensystems, einen oder mehrere Radikalbildner und gegebenfalls einen oder mehrere Cokatalysatoren, die hieraus erhältlichen Polymerisate, sowie die Verwendung der im Verfahren herstellbaren Polymerisate zur Herstellung von Formkörpern aller Art.

Die Copolymerisation polarer und unpolarer Monomere unter hohem Druck durch radikalische Polymerisation ist bekannt. Beispielhaft sei die Herstellung von Ethylen-Acrylat-Copolymeren erwähnt (M. Buback et.al., Macromol. Chem. Phys. 1997, 198, 3627), die zwischen 130 und 225°C bei Drücken zwischen 1500 und 2500 bar verläuft. Weiterhin werden Ethylen-Vinylacetat-Copolymere typischerweise bei 2380 bar und 280°C hergestellt. Dieser hohe Druck von in der Regel 500 bis 3000 bar ist nicht nur technisch sondern auch wirtschaftlich problematisch. Ähnlich verläuft auch die Fertigung von Ethylen-Vinylacetat-CO-Terpolymeren. Als Beispiele seien hier weiterhin US-A-3 264 275, US-A-3 509 115, US-A-3 948 850, US-A-4 217 431, US-A-4 260 722 und US-A-4 267 090 angeführt. In EP-A-374 666, EP-A-341 499 und EP-A-307 755 werden beispielsweise Lösungspolymerisationen von Ethylen und Vinylacetat beschrieben. Weitere Literatur findet sich in M. Busch et.al., Macromol. Theory Simul. 1998, 7, 435.

Als Monomere zur Fertigung von polaren Ethylencopolymeren kommen demnach gemäß dem Stand der Technik nur Acrylate oder deren Salze, Vinylester und Kohlenmonoxid in Frage. Es handelt sich um Hochdruckverfahren oder aber um Emulsionspolymerisationen mit radikalischer Initiierung.

Ethylen-Acrylnitril-Copolymere sind bislang nur durch nachträgliche Hydrierung von Butadien-Acrylnitril-Copolymeren zugänglich, wie beispielsweise in DE-A-33 29 974 beschrieben.

Die alternierende radikalische Copolymerisation von Acrylderivaten und Ethen bei geringerem Druck ist bekannt und beispielsweise in DE-A-19 49 370 und in DE-A-44 04 320 beschrieben. Nachteil der beschriebenen Verfahren ist, daß die Copolymerisation nur in Anwesenheit zum polaren Monomeren äquimolarer Menge an Säuren oder Komplexierungsmitteln gelingt und nur zu alternierenden Produkten führt, und daß die Entfernung dieser Komplexierungsmittel nach Beendigung der Polymerisation nur unter großem Aufwand gelingt.

Aus WO-A-96/23010 ist bekannt, daß mittels Diazadienpalladiumkomplexen die Copolymerisation von Acrylsäureesterderivaten oder Methylvinylketon gelingt. Nachteil dieses Verfahren ist, daß das polare Monomere nur in einem geringeren Verhältnis eingebaut wird, daß das Molekulargewicht der erhaltenen Copolymere bereits bei geringen Einbauraten vergleichsweise niedrig ist, und daß zur Herstellung der Copolymeren vergleichsweise hohe Mengen des Katalysators eingesetzt werden müssen, was aus wirtschaftlichen Überlegungen problematisch ist.

In EP-A-558 143 wird ein Katalysator auf Nickel-Basis beschrieben, mittels dessen Ethylen und Methylmethacrylat copolymerisiert werden können. Nachteil des beschriebenen Verfahrens ist jedoch, daß ebenfalls nur unzureichende Mengen des polaren Comonomeren eingebaut werden.

WO-A-98/27124 beschreibt ein Verfahren zur Polymerisation von unpolaren Monomeren (Ethylen) mittels Bisiminopyridylcobalt- oder -eisenkömplexen der allgemeinen Formel (I) und Cokatalysatoren, sowie die Trägerung derartiger Katalysatorsysteme in flüssiger Phase oder im Wirbelschichtverfahren. WO-A-98/30612 beschreibt ein Verfahren zur Polymerisation von unpolaren Monomeren (Propylen) mittels der in WO-A-98/27124 offenbarten Katalysatoren. WO-A-99/02472 beschreibt Bisiminopyridylkomplexe des Eisens und ein Verfahren zur Oligo- und Polymerisation von Ethylen.

WO-A-99/12981 beschreibt ein Katalysatorsystem aus Bisiminopyridylkomplexen des Eisens, Cobalts, Rutheniums oder Mangans zur Homo- und Copolymerisation von Ethylen und a-Olefinen und beansprucht die Verwendung von Ethen, Propen, Buten, Hexen, Methylmethacrylat, Methylacrylat, Butylacrylat, Acrylnitril, Vinylacetat und Styrol. Nachteil des beschriebenen Verfahrens ist, daß zur Aktivierung der Bisiminopyridylkomplexe Organoaluminiumverbindungen eingesetzt werden müssen, die, wie jeder Fachmann leicht nachvollziehen kann, mit den beanspruchten polaren Monomeren reagieren können und damit nicht mehr zur Aktivierung des Katalysators zur Verfügung stehen. 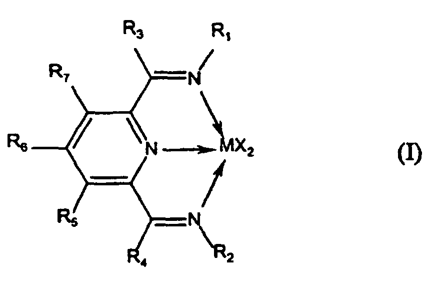 G.J.P. Pritovsek et al., Chem. Commun. 1998, 849 beschreiben Bisiminopyridylkomplexe des Eisens und Cobalts der allgemeinen Formel (I) sowie deren Einsatz als Polymerisationskatalysatoren für unpolare Monomere.

B.L. Small, M. Brookhart, A.M.A. Bennett, J. Am. Chem. Soc. 1998, 120, 4049 und B.L. Small, M. Brookhart, J. Am. Chem. Soc. 1998, 120, 7143 beschreiben ebenfalls Bisiminopyridylkomplexe des Eisens und Kobalts der allgemeinen Formel (I) sowie deren Einsatz als Polymerisationskatalysatoren. In C. Pellecchia, M. Mazzeo, D. Pappalardo, Macromol. Rapid. Commun., 19, 651-55 (1998) und B.L. Small, M. Brookhart, Macromolecules 1999, 32, 2120-30 (1999) werden ebenfalls Bisiminopyridylkomplexe des Eisens und Cobalts der allgemeinen Formel (I) sowie deren Verwendung als Polymerisationskatalysatoren für Propylen beschrieben.

Allen Dokumenten ist gemein, daß die dort beschriebenen Polymerisationen rein koordinative Polymerisationen sind und die Copolymerisation mit polaren Monomeren nicht gelingt.

Es stellte sich also die Aufgabe, ein Verfahren zur Copolymerisation von polaren und unpolaren Monomeren und ein hierfür geeignetes Katalysatorsystem zur Verfügung zu stellen.

Weiterhin stellte sich die Aufgabe, Nachteile der im Stand der Technik beschriebenen Copolymerisationsverfahren zu vermeiden.

Gegenstand der Erfindung ist also ein Verfahren zur Copolymerisation von polaren und unpolaren Monomeren, dadurch gekennzeichnet, daß man man mindestens ein polares und mindestens ein unpolares Monomer in Gegenwart einer oder mehrerer Übergangsmetallverbindungen der Gruppe 5-10 des Periodensystems nach IUPAC 1985, einem oder mehreren Radikalbildnern und gegebenfalls einem oder mehreren Co-Katalysatoren polymerisiert.

Unter polaren Monomeren werden im Sinne der Erfindung radikalisch polymerisierbare Monomere mit einer mehr oder weniger stark ausgeprägten Teil-Ladungsverteilung im Molekül verstanden. Beispiele hierfür sind Chloropren, Styrol, Acrylnitril, Vinylchlorid, Acrylsäure, Acrylsäureester, Cyanacrylester, Methacrylsäure, Methacrylsäureester, Acrylamid, Methacrylnitril, Vinylacetat, Propenoxid, Ethenoxid, Vinylcarbazol, Vinylpyrrolidon, Vinylester, sowie die auf diesen Grundmolekülen aufbauenden Verbindungen. Bevorzugt werden Acrylnitril, Acrylsäureester, Methacrylsäureester und Styrol.

Unter unpolaren Monomeren im Sinne der Erfindung werden durch koordinative Polymerisation polymerisierbare Monomere ohne eine besondere Ladungstrennung im Molekül verstanden. Beispiele hierfür sind Olefine, insbesondere Ethylen, Propylen, Butene, Pentene, Hexene, Heptene, Octene und deren höhere Homologen, Diolefine, insbesondere Butadien, Isopren, Pentadiene, Hexadiene, Heptadiene, Octadiene, Methyloctadiene, Ethylidennorbomen, Vinylnorbornen, Norbornadiene, Cyclooctadiene und deren höhere Homologen und Triene.

Die Liste an geeigneten polaren und unpolaren Monomeren könnte selbstverständlich verlängert werden, doch leistet eine weitere Aufzählung sicherlich nichts zusätzliches zum Verständnis der Erfindung.

Übergangsmetallverbindungen im Sinne der Erfindung sind Verbindungen, die der allgemeinen Formel (II) entsprechen,

MLₐQ_{b} (II),

wobei M ein Metall der Gruppe 5-10 des Periodensystems nach IUPAC 1985 darstellt, bevorzugt ein Metall ausgewählt aus der Gruppe Vanadium, Chrom, Mangan, Eisen, Cobalt, Nickel, Ruthenium, Rhodium und Palladium,
wobei L einen 2-, 3- oder 4-zähnigen chelatisierenden Liganden darstellt, bevorzugt einen 3-zähnigen chelatisierenden Ligand,
wobei Q einen mono-anionischen oder nicht-ionischen Liganden darstellt,
wobei a und b eine ganze Zahl darstellen, b ≥ 1, bevorzugt b ≥ 2 ist und a sich berechnet aus der (Gesamtzahl der Koordinationsstellen an M - b) / die Anzahl der Zähne des Liganden.

Beispiele für 2-zähnige chelatisierende Liganden sind Diamine, wie beispielsweise Ethylendiamin, Propylendiamin und Butylendiamin, Diimine, Dipyridyle, Dioxime, Dioximate, 1,3-Diketone, wie besipielsweise Acetylacetonat und Hexafluoracetylacetonat, Carboxylate, Dichinone, Semichinone, Bisoxazoline, Bisthiazoline, 1,10-Phenanthrolin, 1,8-Naphthyridin, Pyridyl-2-alkylamine, Pyridyl-2-dialkylamine, Pyridyl-2-arylamine, Pyridyl-2-diarylamine, 2-Pyridylimine, Pyridin-2-nitrile, Dinitrile, wie beispielsweise 1,2-Benzodinitril, 1,8-Naphthodinitril, Schwefeldiimine, Dipyrazolylborate, Dipyrazolylalkane, Dipyrazolylketone, aliphatische und aromatische Diphosphine, Phosphorimine oder Phosphorylide.

Bevorzugte 2-zähnige chelatisierende Liganden sind Ethylendiamin, Propylendiamin, Bipyridyl, Diimine, 2-Pyridylamine, 2-Pydridylimine, Ethylendiphosphin, 1,3-Diphosphinopropan und Phosphorylidliganden.

Beispiele für 3-zähnige chelatisierende Liganden sind Terpyridin, Triamine, 2,6-Diaminopyridyle, 2,6-Bisiminopyridyle, 2,6-Biscyclopentadienylpyridine, Bis(2,6-Hydrazonyl)pyridine, Trispyrazolylborate, Trispyrazolylalkane, Trispyrazolylketone oder Triphosphine.

Bevorzugte 3-zähnige chelatisierende Liganden sind Triamine, Trispyrazolylborate, 2,6-Diaminopyridyle, Triphosphine und Bisiminopyridylliganden der allgemeinen Formel (III), 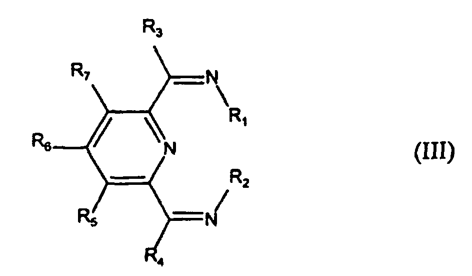 wobei
- R¹, R², R3, R⁴, R⁵, R⁶ und R⁷: unabhängig voneinander ausgewählt sind aus Wasserstoff, gegebenenfalls substituierte C₁-C₁₀-Alkylgruppe, gegebenenfalls substituierter C₆-C₁₄-Arylrest oder Teile eines Ringsystems sind.

Besonders bevorzugt stellen R¹ und R² unabhängig voneinander einen gegebenenfalls substituierten Arylrest dar und
- R³, R⁴, R⁵, R⁶ und R⁷: werden unabhängig voneinander ausgewählt aus Wasserstoff, gegebenenfalls substituierte C₁-C₁₀-Alkylgruppe, gegebenenfalls substituierter C₆-C₁₄-Arylrest oder Teile eines Ringsystems.

Beispiele für 4-zähnige chelatisierende Liganden sind Tetraamine, Tetrapyridine, Tetraphosphine, salen, Bis(pyridylimino)isoindoline und Porphyrine.

Bevorzugte 4-zähnige chelatisierende Liganden sind Trialkyltetraamine, Triaryltetraamine, Tetraphosphine und salen.

Im allgemeinen findet sich beispielsweise eine Aufzählung unterschiedlicher 2-,3-oder 4-zähniger Liganden in G. Wilkinson, R.D. Gillard und J.A. McCleverty (Hrsg.), Comprehensive Coordination Chemistry - The synthesis, reaction, properties & applications of coordination compounds, Volume 2: Ligands, Pergamon Press, New York, 1. Auflage 1987, S. 30-56.

Beispiele für mono- oder nicht-ionische Liganden Q sind Halogenid, Hydrid, C₁- bis C₁₀-Alkyl oder -Alkenyl, C₆-C₁₀-Cycloalkyl, C₆- bis-C₁₄-Aryl, Alkylaryl mit C₁- bis C₁₀-Gruppierung im Alkylrest und C₆- bis C₁₄-Gruppierung im Arylrest, -OR⁸, OR⁸R⁹, -NR¹⁰R¹¹, NR¹⁰R¹¹R¹², -N(SiR¹⁰R¹¹R¹²)₂, N(SiR¹⁰R¹¹R¹²)₃, -PR¹⁰R¹¹, PR¹⁰R¹¹R¹², CO, Tetrahydrofuran, Pyridin, Acetonitril, bedeuten, wobei Q gleich oder verschieden sein kann, wobei eine oder mehrere der beiden Gruppierungen Q auch verbrückt sein können, und wobei R⁸ bis R¹² aus H, C₁- bis C₁₀-Alkyl, C₆- bis C₁₀-Cycloalkyl, C₆- bis C₁₄-Aryl, Alkylaryl oder Arylalkyl ausgewählt sein kann und gleich oder verschieden sein können.

Unter Halogen versteht der Fachmann Fluor, Chlor, Brom oder Jod, bevorzugt sind Chlor und Brom.

Unter C₁-C₁₀-Alkyl werden sämtliche dem Fachmann bekannte lineare oder verzweigte Alkylreste mit 1 bis 10 C-Atomen verstanden, wie Methyl, Ethyl, n-Propyl, i-Propyl, n-Butyl, i-Butyl, t-Butyl, n-Pentyl, i-Pentyl, neo-Pentyl und Hexyl, Heptyl, Oktyl, Nonyl und Decyl, die ihrerseits wiederum substituiert sein können. Als Substituenten kommen hierbei Halogen, Nitro, Hydroxyl, oder auch C₁-C₁₀-Alkyl, sowie C₆-C₁₄-Cycloalkyl oder -Aryl in Frage, wie Benzoyl, Trimethylphenyl, Ethylphenyl, Chlormethyl, Chlorethyl und Nitromethyl.

Unter C₆-C₁₄- Cycloalkyl werden sämtliche dem Fachmann bekannte ein- oder mehrkemige Cycloalkylreste mit 6 bis 14 C-Atomen verstanden, wie Cyclohexyl, Cycloheptyl, Cyclooctyl und Cyclononyl oder auch teil- oder vollhydriertes Fluorenyl, die ihrerseits wiederum substituiert sein können. Als Substituenten kommen hierbei Halogen, Nitro, C₁-C₁₀-Alkoxy oder auch C₁-C₁₀-Alkyl, sowie C₆-C₁₂-Cycloalkyl oder -Aryl in Frage, wie Methylcyclohexyl, Chlorcyclohexyl und Nitrocyclohexyl.

Unter C₆-C₁₄-Aryl werden sämtliche dem Fachmann bekannte ein- oder mehrkernige Arylreste mit 6 bis 14 C-Atomen verstanden, wie Phenyl, Naphthyl, Fluorenyl, die ihrerseits wiederum substituiert sein können. Als Substituenten kommen hierbei Halogen, Nitro, C₁-C₁₀-Alkoxy oder auch C₁-C₁₀-Alkyl, sowie C₆-C₁₄-Cycloalkyl oder -Aryl in Frage, wie Bromphenyl, Chlorphenyl, Toloyl und Nitrophenyl.

Bevorzugt wird Q ausgewählt aus Halogenid, besonders Chlorid und Bromid, Hydrid, Methyl, Ethyl, Butyl, Tetrahydrofuran, CO und Pyridin.

Eine besonders bevorzugte Übergangsmetallverbindung stellt die allgemeine Formel (IV) dar, 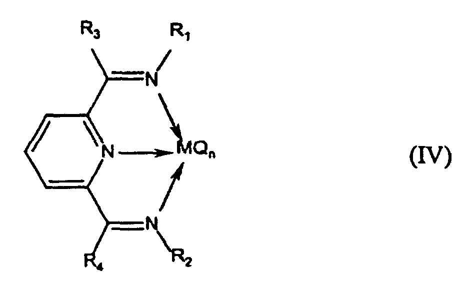 wobei
- M: ausgewählt ist aus Eisen, Kobalt, Nickel oder Palladium,
- Q: ein mono-anionischer oder nicht-anionischer Ligand, insbesondere Chlor, Methyl, Ethyl oder Hydrid ist,
- R¹ und R²: unabhängig voneinander einen gegebenenfalls substituierten Arylrest, insbesondere Dialkylphenyl, darstellen
- R³ und R⁴: unabhängig voneinander ausgewählt sind aus Wasserstoff, gegebenenfalls substituierte C₁-C₁₀-Alkylgruppe, gegebenenfalls substituierter C₆-C₁₄-Arylrest oder Teile eines Ringsystems darstellen,
- n: eine ganze Zahl im Bereich von 1 bis 3, insbesondere 2 darstellt,

Bevorzugt wird die Übergangsmetallverbindung so ausgewählt, daß die Übergangsmetallverbindung, gegebenfalls in Gegenwart eines Cokatalysators, reversibel einen Komplex mit der radikalisch wachsenden Polymerkette bilden kann und in die gebildete Bindung zwischen Übergangsmetall und Polymerkette unpolare Monomere, insbesondere Olefine insertiert werden können. Ohne hieran gebunden sein zu wollen ist unsere Hypothese, daß diese Insertion nach dem sogenannten Monometallischen Mechanismus nach Arlman und Coissee, in: Journal of Catalysis 1964, 3, 99ff oder Bimetallischen Mechanismus nach Patat und Sinn, in: Angewandte Chemie 1958, 70, 496 geschieht.

Als Radikalbildner kommen sämtliche dem Fachmann bekannten Radikalbildner in Frage, die in der Lage sind, die radikalische Polymerisation des polaren Monomeren zu initiieren und gleichzeitig nicht nachteilig mit der Übergangsmetallverbindung reagiert.

Abhängig von der eingesetzten Monomerkombination läßt sich an Hand weniger Vorversuche der geeignetste Radikalbildner aus der Vielzahl der verfügbaren Radikalbildner auswählen. Diese alle aufzuzählen, würde nichts weiteres zum Verständnis der Erfindung beitragen. Eine Übersicht prinzipiell geeigneter Radikalbildner findet sich in G. Allen J.C. Bevington (Hrsg.), Comprehensive Polymer Science, Pergamon Press, 1989, 123ff, auf die an dieser Stelle ausdrücklich verwiesen wird.

Trotzdem seien folgende Beispiele geeigneter Radikalbildner explizit genannt: Peroxide, wie Kalium- oder Natriumperoxodisulfat, Dibenzoylperoxid, Dicumylperoxid, *tert*.-Butylcumylperoxid, Cumylhydroperoxid, *tert*.-Butylhydroperoxid, Di-*tert*.-butylperoxid, Diisobutyrylperoxid, Dilaurylperoxid, Didecanoylperoxid, Diisopropylperoxydicarbonat, Dibutylperoxydicarbonat, *tert*.-Butylperoxyisopropylcarbonat, *tert*.-Butylperoxypivalat, *tert*.-Amylperoxypivalat, *tert*.-Butylperoxyisononat, *tert*.-Butylperoxydiethylacetat oder *tert*.-Butylperoxyacetat, und Diazoverbindungen,wie 2,2'-Azobis(isobutyronitril), 2,2'-Azobis(2-valeronitril), 1,1'-Azobis(1-cyclohexannitril) oder 4,4'-Azobis(4-cyanovaleriansäure), oder Mischungen hieraus.

Die Wahl des geeigneten Radikalbildners wird auch durch das Reaktionsmedium und die Polymerisationstemperatur beeinflußt. Zusammenfassend sei nochmals betont, daß der Radikalbildner so ausgewählt wird, daß er die radikalische Polymerisation des polaren Monomeren unter den gegebenen Bedingungen (Temperatur, Druck, Monomerart, eventuell vorhandenes Lösungsmittel usw.) initiiert und gleichzeitig nicht nachteilig mit der Übergangsmetallverbindung oder der hieraus gebildeten aktiven Übergangsmetallspezies reagiert. Aus diesem Grunde ist zum Beispiel molekularer Sauerstoff als Radikalbildner in der Regel nicht geeignet.

Bei vielen stark koordinierenden Liganden Q, wie Halogen oder Hydrid oder auch Alkylen kann es nötig werden einen Cokatalysator einzusetzen, um die Liganden Q der Übergangsmetallverbindung durch sogenannte nicht- oder schwach koordinierende Liganden zu ersetzen. Wir verweisen an dieser Stelle ausdrücklich auf W. Beck et al., Chemical Reviews 1988, 88, 1405 und S. Strauss, Chemical Reviews 1993, 93, 927.

Als Cokatalysator können in diesem Fall Koordinationskomplexverbindungen eingesetzt werden, ausgewählt aus der Gruppe der starken, neutralen Lewis-Säuren, der ionischen Verbindungen mit Lewis-sauren Kationen oder Brönstedt-sauren Kationen und nicht-koordinierenden Anionen.

Als starke neutrale Lewis-Säuren, die mit Q stabile Salze oder Koordinationskomplexe bilden können, sind Verbindungen der allgemeinen Formel V bevorzugt, in der

M²X¹X²X³ (V)

- M²: ein Element der Gruppe 3 bedeutet, insbesondere B, Al oder Ga, vorzugsweise B,
- X¹, X² und X³: für H, C₁- bis C₁₀-Alkyl, C₁- bis C₁₄-Cycloalkyl, C₆- bis C₁₄-Aryl, Alkylaryl, Arylalkyl, Halogenalkyl, Halogenaryl, Halogenalkylaryl oder Halogenarylalkyl mit jeweils C₁- bis C₁₀-Alkyl-, C₆- bis C₁₄-Cycloalkyl- und C₆- bis C₁₄-Arylresten oder/und Fluor, Chlor, Brom oder Jod stehen, insbesondere für Halogenaryle, vorzugsweise perfluorsubstituiert.

Besonders bevorzugt im Sinne der Erfindung werden jedoch Verbindungen der allgemeinen Formel (V), in der X¹, X² und X³ gleich sind, vorzugsweise Tris(pentafluorophenyl)boran eingesetzt. Diese Verbindungen sowie Verfahren zu ihrer Herstellung sind an sich bekannt und u.a. in WO-A-93/03067 beschrieben.

Als ionische Verbindungen mit Lewis- oder Brönstedt-sauren Kationen und nichtkoordinierenden Anionen sind Verbindungen der allgemeinen Formel VI geeignet,

[L]^{d+}[(M²)^{m+}A₁A₂ ... Aₙ]^{d-} (VI)

wobei
- L: ein Lewis-saures Kation gemäß der Lewis-Säure-Base-Theorie bedeutet, vorzugsweise Carbonium-, Oxonium-, oder/und Sulfoniumkationen sowie kationische Übergangsmetallkomplexe, insbesondere Triphenylmethylkation, Silberkation oder Ferrocenylkation, oder L ein Brönstedt-saures Kation gemäß der Brönstedt-Säure-Base-Theorie bedeutet, bevorzugt Trialkylammonium-, Dialkylarylammonium-, oder/und Alkyldiarylammonium, insbesondere N,N-Dimethylanilinium,
- M²: ein Element der Gruppe 3 bedeutet, insbesondere B, Al oder Ga, vorzugsweise B,
- A₁ bis Aₙ: für einfach negativ geladene Reste steht wie Hydrid, C₁- bis C₂₈-Alkyl, C₆-bis C₁₄-Cycloalkyl, C₆- bis C₁₄-Aryl, Alkylaryl, Arylalkyl, Halogenalkyl, Halogenaryl, Halogenalkylaryl oder Halogenarylalkyl mit jeweils C₁- bis C₂₈-Alkyl-, C₁- bis C₁₄-Cycloalkyl- und C₆- bis C₁₄-Arylresten, oder Halogen, Alkoxid, Aryloxid oder Organometalloid steht, und A₁ bis Aₙ gleich oder verschieden sind,
- d: eine ganze Zahl von 1 bis 6 bedeutet und d = n-m ist,
- n: für gänze Zahlen von 2 bis 8 steht, und
- m: eine ganze Zahl von 1 bis 6 ist.

Bevorzugte Anionen [(M²)^{m+}A₁A₂ ... Aₙ]^{d-} der allgemeinen Formel VI sind jene, in der A₁ bis Aₙ gleich, raumerfüllende, aromatische Kohlenwasserstoffreste sind und M² gleich Bor oder Aluminium ist, insbesondere Tetraphenylborat, Tetrakis(3,5-bis(trifluoromethyl)phenylborat) und Tetrakis(pentafluorophenyl)borat.

Es können selbstverständlich auch Mischungen unterschiedlicher Verbindungen der allgemeinen Formel (II), (III), (IV), (V) und (VI) sowie Mischungen unterschiedlicher Radikalbildner und unterschiedlicher Cokatalysatoren eingesetzt werden.

Der oder die Radikalbildner werden in der Regel in (Gesamt-)Konzentrationen im Bereich von 0,01 Mol-% bis 5 Mol-% bezogen auf die Gesamtkonzentration des oder den polaren Monomeren, bevorzugt im Bereich von 0,01 - 1 Mol-% eingesetzt. Die günstigste Konzentration ist durch wenige Vorversuche leicht zu ermitteln.

Die Übergangsmetallverbindung oder die Übergangsmetallverbindungen werden im Bereich von 0,005 bis 10 Mol-% bezogen auf die Gesamtkonzentration des oder der Radikalbildner, bevorzugt im Bereich von 0,01 - 0,1 Mol-% eingesetzt. Die günstigste Konzentration ist durch wenige Vorversuche leicht zu ermitteln.

Die Menge an Cokatalysator oder Cokatalysatoren richtet sich nach der Zahl der zu abstrahierenden Liganden Q der Übergangsmetallverbindung. Pro zu abstrahierendem stark koordinierendem Liganden Q werden theoretisch ein bis 1,2 Cokatalysatormoleküle eingesetzt. Dies bedeutet, daß in der Regel im Bereich von 0,01 bis 20 Mol-% bezogen auf die Gesamtkonzentration des oder der Radikalbildner, bevorzugt im Bereich von 0,01 - 0,5 Mol-% eingesetzt werden.

Es kann vorteilhaft sein, das erfindungsgemäße Katalysatorsystem auf einen Träger aufzubringen. In diesem Fall sollte die Anbindung vorzugsweise über den Liganden L erfolgen, so daß die Komponenten des Katalysatorsystems nicht nachteilig mit dem Träger wechselwirken oder reagieren.

Als Trägermaterialien werden bevorzugt teilchenförmige, organische oder anorganische Feststoffe, deren Porenvolumen zwischen 0,1 und 15 ml/g beträgt, bevorzugt zwischen 0,25 und 5 ml/g, deren spezifische Oberfläche größer als 1 ist, bevorzugt 10 bis 1000 m²/g (BET), deren Korngröße zwischen 10 und 2500 µm beträgt, bevorzugt zwischen 50 und 1000 µm, und die an ihrer Oberfläche in geeigneter Weise modifiziert sein können, eingesetzt.

Die spezifische Oberfläche wird in üblicher Weise bestimmt nach Brunauer, Emmet und Teller, *J. Anorg. Chem. Soc.* 1938, *60,* 309, das Porenvolumen durch die Zentrifugationsmethode nach McDaniel, *J. Colloid Interface Sci*. 1980, *78,* 31 und die Teilchengröße nach Comillaut, *Appl. Opt.* 1972, *11*, 265.

Als geeignete anorganische Feststoffe seien beispielsweise genannt, ohne die vorliegende Erfindung jedoch einschränken zu wollen: Silicagele, Fällungskieselsäuren, Tone, Alumosilikate, Talkum, Zeolithe, Ruß, anorganische Oxide, wie beispielsweise Siliciumdioxid, Aluminiumoxid, Magnesiumoxid, Titandioxid, anorganische Chloride, wie beispielsweise Magnesiumchlorid, Natriumchlorid, Lithiumchlorid, Calciumchlorid, Zinkchlorid, oder Calciumcarbonat. Die genannten, anorganischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 21, S. 439 ff (Silicagele), Band 23, S. 311 ff (Tone), Band 14, S. 633 ff (Ruße) und Band 24, S. 575 ff (Zeolithe).

Als organische Feststoffe eignen sich pulverförmige, polymere Materialien, bevorzugt in Form frei fließender Pulver, mit den obengenannten Eigenschaften. Beispielhaft seien genannt, ohne die vorliegende Erfindung einschränken zu wollen: Polyolefine, wie beispielsweise Polyethen, Polypropen, Polystyrol, Polystyrol-co-divinylbenzol, Polybutadien, Polyether, wie beispielsweise Polyethylenylenoxid, Polyoxytetramethylen oder Polysulfide, wie beispielsweise Poly-p-phenylensulfid. Besonders geeignete Materialien sind Polypropylen, Polystyrol oder Polystyrol-co-divinylbenzol. Die genannten organischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 19, S. 195 ff (Polypropylen), und Band 19, S. 265 ff (Polystyrol).

Die Herstellung des geträgerten Katalysatorsystems kann in einem weiten Temperaturbereich erfolgen. Üblicherweise wird bei Temperaturen von -80 bis +200°C, bevorzugt -20 bis 150°C, besonders bevorzugt 20 bis 100°C, gearbeitet.

Die Erfindung betrifft weiterhin eine Zusammensetzung aus einer oder mehrerer Übergangsmetallverbindungen der Gruppe 5-10 des Periodensystems nach IUPAC 1985, einem oder mehreren Radikalbildnern und gegebenfalls einem oder mehreren Co-Katalysatoren, sowie deren Verwendung als Katalysatorsystem in einem Verfahren zur Co-Polymerisation von polaren und unpolaren Monomeren.

Die Polymerisation erfolgt bevorzugt indem man die Monomere mit der erfindungsgemäßen Zusammensetzung gelöst in geeigneten Lösungsmitteln, gasförmig, flüssig in feiner Verteilung oder suspendiert in flüssigem Verdünnungsmittel in Berührung bringt.

Den gasförmigen, flüssigen oder versprühten Monomeren können weitere Gase oder fein verteilte Flüssigkeiten zugemischt werden, die entweder der Verdünnung, der Versprühung oder der Wärmeabführung dienen.

Als Verdünnungsmittel oder Lösungsmittel eignen sich dem Fachmann bekannte Flüssigkeiten oder verflüssigte Gase, die die Polymerisation und das Katalysatorsystem nicht nachteilig beeinflussen, insbesondere gesättigte Kohlenwasserstoffe wie Pentan, Hexan, Cyclohexan, Benzin und Petrolether.

Die Polymerisation kann bei Drücken von 0,01 bar bis 1000 bar, bevorzugt 0,1 bis 500 bar, besonders bevorzugt 1 bis 100 bar, ganz besonders bevorzugt 1 bis 10 bar durchgeführt werden. Im allgemeinen wird die Polymerisation bei Temperaturen von -20 bis 250°C, bevorzugt bei 0 bis 200°C, besonders bevorzugt bei 20 bis 160°C, durchgeführt. Die Temperatur muß hierbei trivialerweise mit dem eingesetzten Radikalbildner abgestimmt sein, damit der Radikalbildner auch bei der Temperatur zerfällt.

Da die Übergangsmetallverbindung in der Regel sauerstoff und wasserempfindlich ist, ist es vorteilhaft Sauerstoff und Wasser auszuschließen.

Die Reihenfolge der Zusammengabe der Einzelbestandteile der Zusammensetzung ist beliebig. In der Regel wird die fertige Zusammensetzung mit dem Monomergemisch in Kontakt gebracht und dann die Temperatur über die Zerfallstemperatur des Radikalbildners erhöht.

Ein weiterer Gegenstand der Erfindung ist die Verwendung der erfindungsgemäß erhältlichen Polymerisate zur Herstellung von Formkörpern aller Art, insbesondere Folien, Platten, Schläuche, Profile, Ummantelungen, Extrudate und Spritzgußartikel.

Besagte Polymerisate stellen auf molekularer Ebene statistische Copolymerisate dar und sind keine AB-Blockcopolymerisate. Eine weitere bevorzugte Verwendung ist die Verwendung als Ausgangsmaterial für Klebstoffe und Additive, insbesondere Öladditive. Die Zusammensetzung kann abhängig von den eingestellten Bedingungen, der katalytisch aktiven Zusammensetzung und der Monomerzusammensetzung und Konzentrationen über weite Bereiche variiert werden. Der Molenbruch von eingebauten polaren Monomeren zu eingebauten unpolaren Monomeren liegt im Bereich von 0,05 - 0,95.

Als Verunreinigung können die erfindungsgemäß hergestellten Polymerisate HomoPolymerisate der einzelnen Monomeren enthalten. Für spezielle Anwendungen kann es vorteilhaft sein, diese durch geeignete Maßnahmen, wie fraktionierendes Fällen oder Extraktionsverfahren zu entfernen.

Die nachfolgenden Beispiele sollen die vorliegende Erfindung näher erläutern, ohne diese jedoch auf die Beispiele einzuschränken.

### Beispiele:

Alle Umsetzungen wurden unter Ausschluß von Luft und Feuchtigkeit, soweit erforderlich, und unter Verwendung der Schlenk- und Hochvakuumtechnik durchgeführt. Die verwendeten Lösungsmittel waren trocken, mit gereinigtem Argon gesättigt und wurden unter Argonatmosphäre gelagert.

2,2'-Azobis(isobutyronitril), AIBN, ist kommerziell (Merck KGaA) erhältlich und wurde ohne weitere Vorreinigung eingesetzt. Das verwendete Kaliumperfluorophenylborat, K[B(C₆F₅)₄]), wurde hergestellt aus der entsprechenden LithiumVerbindung nach S. Cohen und A. Massey, Adv. Fluor. Chem. 6, 83-285 (1970), das Na[B(C₆H₅)₄] wurde von Merck KGaA bezogen und ohne weitere Reinigung eingesetzt.

Die Polymerisationsreaktionen wurden in einem 1 1-Büchi-Glasautoklaven bei 60°C durchgeführt und die Menge an Ethen durch Massedurchflußmesser erfasst. Die Polymere wurden durch Ausfällung in Ethanol isoliert, durch Waschen mit Ethanol gereinigt und im Vakuum getrocknet.

Die Bestimmung des Gehaltes an Ethen im Polymeren erfolgte mittels NMR-Spektroskopie in d₆-Dimethylsulfoxid, die Bestimmung der Glastemperatur T_{g} mittels DSC und die Bestimmung des Gewichtsmittels des Molekulargewichtes M_{W} sowie der Polydispersität M_{W}/M_{N} mittels GPC gegen Polystyrol-Standard in Dimethylacetamid.

### Komplexsynthese

### 2,6-Dibenzoylpyridinbis(2,6-dimethylphenylimino)cobaltdichlorid (Komplex A)

### Beispiel 1a:

### Synthese von 2,6-Dibenzoylpyridin

In einem 500 ml Rundkolben mit Rückflußkühler werden unter Ar-Atmosphäre 20,0 g (98 mmol) Pyridin-2,6-dicarbonsäurechlorid in 250 ml trockenem Benzol mit 32,4 g (243 mmol) wasserfreiem Aluminiumtrichlorid versetzt. Es wird 4h unter Rückfluß gerührt, dann abgekühlt, über Nacht bei Raumtemperatur gerührt und dann erneut 6h unter Rückfluß gerührt. Nach dem Abkühlen wird der Ansatz vorsichtig in 500 ml Eiswasser gegossen. Die organische Phase wird abgetrennt und die wäßrige Phase zweimal mit je 100 ml Diethylether gewaschen. Die vereinigten organischen Phasen werden zweimal mit je 100 ml Wasser gewaschen und dann über Natriumsulfat getrocknet. Die Lösungsmittel werden am Rotationsverdampfer abgezogen und das Produkt wird aus Diethylether umkristallisiert. Ausbeute: 16,80 g.
¹H-NMR (in Aceton-d₆/TMS): δ = 8.32-8.26 (m,3H), 8.14-8.06 (m,4H), 7.7-7.4 (m,6H)

### MS: 287, 259, 230, 182, 105, 77, 51

### Beispiel 1b:

### Synthese von 2,6-Dibenzoylpyridinbis(2,6-dimethylphenylimino)nickeldibromid

Zu einer Lösung von 1,42 g (5 mmol) 2,6-Dibenzoylpyridin und 1,2 ml (10 mmol) 2,6-Dimethylanilin in 50 ml Eisessig werden 1,20 g (5,5 mmol) wasserfreies Nickeldibromid gegeben. Die Mischung wird 6 h unter Rückfluß gerührt. Es fällt ein orangebraunes Pulver aus, das warm abfiltriert wird. Der Rückstand wird zweimal mit jeweils 50 ml Diethylether gewaschen und getrocknet. Ausbeute: 3,35 g
FT-IR (KBr): ν(C=N) = 1579 cm⁻¹, 1610 cm⁻¹.

### Beispiel 1c:

### Synthese von 2,6-Dibenzoylbis(2,6-dimethylphenylimino)pyridin

Zu einer Suspension von 0,71 g (1 mmol) 2,6-Dibenzoylpyridinbis(2,6-dimethylphenylimino)nickeldibromid in 10 ml THF werden 10 ml einer 10 %-igen wässrigen NaCN-Lösung gegeben und 30 min bei RT gerührt. Die organische Phase wird abgetrennt und über Natriumsulfat getrocknet. Nach dem Entfernen des Lösungsmittels bleibt das Bisiminopyridylderivat als schwach gelbes Pulver zurück. Ausbeute: 0,40 g.
¹H-NMR (in CDCl₃) : δ = 8.07 (m,1H), 7.77 (m,2H), 7.43-7.36 (m,6), 6.93-6.81 (m, 10H), 2.01 (s, 12H); MS : M⁺ = 494 g/mol.

### Beispiel 1d:

### Synthese von 2,6-Dibenzoylpyridinbis(2,6-dimethylphenylimino)cobaltdichlorid

Zu einer Lösung von 0,28 (0,5mmol) 2,6-Dibenzoylbis(2,6-dimethylphenylimino)-pyridin in 20 ml trockenem THF werden bei Raumtemperatur 0,07 g (0,5 mmol) wasserfreies Cobalt(II)-chlorid gegeben und die Mischung 48 h bei RT gerührt. Anschließend wird die Lösung auf die Hälfte des Volumens eingeeengt und mit 100 ml Hexan versetzt. Der Bisiminopyridylcobaltkomplex fällt als hellbraunes Pulver aus und wird nach dem Abfiltrieren im Vakuum getrocknet. Ausbeute: 0,15 g.
FT-IR (KBr) : υ(C=N) 1571 cm⁻¹.

### 2,6-Dibenzoylpyridin(2,6-diisopropylphenylimino)cobaltdichlorid (Komplex B)

### Beispiel 2a:

### Synthese von 2,6-Dibenzoylbis(2,6-diisopropylphenylimino)pyridin

Zu einer Lösung von 3,6 ml (19 mmol) 2,6-Diisopropylanilin und 0,91g (3,2 mmol) 2,6-Dibenzoylpyridin, dessen Herstellung erfolgt wie im Beispiel für die Herstellung von Komplex A beschrieben, in 50 ml Toluol wird bei 0°C eine Lösung von 0,4 ml (3,5 mmol) Titantetrachlorid in 20 ml Toluol getropft. Nach beendeter Zugabe wird 90 min bei RT und anschließend 12 h unter Rückfluß gerührt. Nach Abkühlen auf RT wird die orangefarbene Suspension filtriert und der Rückstand dreimal mit jeweils 30 ml Toluol gewaschen. Das Lösungsmittel wird abdestilliert und zur Vervollständigung der Hydrochloridfällung werden 100 ml Hexan zugegeben. Es wird erneut filtriert und das Filtrat vom Lösungmittel befreit. Anschließend wird der Rückstand aus Methanol umkristallisiert. Bei -18°C kristallisiert 2,6-Dibenzoylbis(2,6-diisopropylphenylimino)pyridin als schwach gelber Feststoff. Ausbeute: 0,92 g.
¹H-NMR (in CDCl₃) : δ = 8.05-6.83 (m,19H), 2.87 (m,4H), 1.10-0.89 (dd, 24 H).

### Beispiel 2b:

### Synthese von 2,6-Dibenzoylpyridinbis(2,6-diisopropylphenylimino)cobalt(II)-dichlorid

Zu einer Lösung von 0,30 g (0,5 mmol) 2,6-Dibenzoylbis(2,6-diisopropylphenylimino)pyridin in 30 ml trockenem THF werden bei Raumtemperatur 0,07 g (0,5 mmol) wasserfreies Cobalt(II)-chlorid gegeben und die Mischung 12 h bei RT gerührt. Anschließend wird die Lösung auf die Hälfte des Volumens eingeeengt und mit 100 ml Hexan versetzt. Der Bisiminopyridylcobaltkomplex fällt als goldgelber Niederschlag aus und wird nach dem Abfiltrieren im Vakuum getrocknet. Ausbeute: 0,26 g.
FT-IR (KBr) : υ(C=N) 1572 cm⁻¹.

### Polymerisationsversuche

### Beispiel 3:

### Radikalische Polymerisation von Acrylnitril (Vergleichsversuch)

In einem 1000ml-Glasautoklaven werden 10 ml (150 mmol) Acrylnitril in 200 ml Toluol vorgelegt. Nach Zugabe von 230 mg (1,4 mmol) AIBN wird auf 65° geheizt und 4 h bei dieser Temperatur gerührt. Ausbeute: 1,98g.

### Beispiel 4:

### Polymerisation von Ethen/AN mit [(2,6-iPr₂Ph)₂PhPyr]CoCl₂/K[B(C₆F₅)₄]/AIBN

In einem 1000ml-Glasautoklaven werden 10 ml (150 mmol) Acrylnitril in 200 ml Toluol vorgelegt. Es werden anschließend nacheinander 246 mg (1,5 mmol) AIBN, 11 mg (1,5·10⁻² mmol) der Cobaltverbindung B und 24 mg (3·10⁻² mmol) K[B(C₆F₅)₄] zugegeben. Der Reaktor wird verschlossen und 4 bar Ethen aufgepresst, so daß das molare Verhältnis von Acrylnitril zu Ethen = 2/1 beträgt. Dann wird auf 65° geheizt und 4 h bei dieser Temperatur polymerisiert. Ausbeute: 1,17g.

### Beispiel 5:

### Polymerisation von Ethen/AN mit [(2,6-iPr₂Ph)₂PhPyr]CoCl₂/K[B(C₆F₅)₄]/AIBN

5 mg AIBN (3·10⁻² mmol) werden mit 10 ml (150 mmol) Acrylnitril in 200 ml Toluol vorgelegt und auf 60° gebracht. Dann werden 22 mg (3·10⁻² mmol) des Cobaltkomplexes B und 47,4 mg (6·10⁻² mmol) K[B(C₆F₅)₄] zugegeben. Der Reaktor wird verschlossen und 4 bar Ethen aufgepresst, so daß das molare Verhältnis AN/E = 2/1 beträgt, auf 65°C erwärmt und 24 h bei dieser Temperatur polymerisiert. Ausbeute: 0,35g.

### Beispiel 6:

### Polymerisation von Ethen/AN mit [(2,6-iPr₂Ph)₂PhPyr]CoCl₂/K[B(C₆F₅)₄]/AIBN

5 ml (75 mmol) Acrylnitril werden in 200 ml Toluol vorgelegt. Anschließend werden bei 60°C nacheinander 244 mg (1,5 mmol) AIBN, 11 mg (1,5·10⁻² mmol) des Cobaltkomplexes B und 24 mg (3·10⁻² mmol) K[B(C₆F₅)₄] zugegeben. Der Reaktor wird verschlossen, 4 bar Ethen aufgepresst, so daß das molare Verhältnis AN/E = 1/1 beträgt, auf 65°C erwärmt und 4 h bei 65°C polymerisiert. Ausbeute: 0,22 g.

### Beispiel 7:

### Polymerisation von Ethen/AN mit [(2,6-Me₂Ph)₂PhPyr]CoCl₂/K[B(C₆F₅)₄]/AIBN

10 ml (150 mmol) Acrylnitril werden in 200 ml Toluol vorgelegt. Anschließend werden bei 60°C nacheinander 246 mg (1,5 mmol) AIBN, 9,3 mg (1,5·10⁻² mmol) der Cobaltverbindung A und 24 mg (3·10⁻² mmol) K[B(C₆F₅)₄] zugegeben. Der Reaktor wird verschlossen, 4 bar Ethen aufgepresst, so daß das molare Verhältnis AN/E = 2/1 beträgt, auf 65°C erwärmt und 4 h bei dieser Temperatur polymerisiert. Ausbeute: 0,84 g.

### Beispiel 8:

### Polymerisation von Ethen/AN mit [(2,6-Me₂Ph)₂PhPyr]CoCl₂/K[B(C₆F₅)₄]/AIBN

5 ml (75 mmol) Acrylnitril werden in 200 ml Toluol vorgelegt. Anschließend werden bei 60°C nacheinander 245 mg (1,5 mmol) AIBN, 9,3 mg (1,5·10⁻² mmol) des Cobaltkomplexes A und 24 mg (3·10⁻² mmol) K[B(C₆F₅)₄] zugegeben. Der Reaktor wird verschlossen, 4 bar Ethen aufgepresst, so daß das molare Verhältnis AN/E = 1/1 beträgt, auf 65°C erwärmt und 4 h bei dieser Temperatur polymerisiert. Ausbeute: 0,14 g.

### Beispiel 9:

### Polymerisation von Ethen/AN mit [(2,6-iPr₂Ph)₂PhPyr]CoCl₂/Na[B(C₆H₅)₄]/AIBN

10 ml (150 mmol) Acrylnitril werden in 200 ml Toluol vorgelegt. Anschließend werden bei 60°C nacheinander 246 mg (1,5 mmol) AIBN, 11 mg (1,5·10⁻² mmol) der Cobaltverbindung B und 11,3 mg (3·10⁻⁵ mmol) Na[B(C₆H₅)₄] zugegeben. Der Reaktor wird verschlossen, 4 bar Ethen aufgepresst, so daß das molare Verhältnis AN/E = 2/1 beträgt, auf 65°C erwärmt und 4 h bei dieser Temperatur polymerisiert. Ausbeute: 0,95 g.

### Beispiel 10:

### Polymerisation von Ethen/AN mit [(2,6-iPr₂Ph)₂PhPyr]CoCl₂/K(B(C₆F₅)₄]/AIBN

10 ml (150 mmol) Acrylnitril werden in 200 ml Toluol vorgelegt. Anschließend werden bei 60°C nacheinander 246 mg (1,5 mmol) AIBN, 11 mg (1,5·10⁻² mmol) der Cobaltverbindung B und 24 mg (3·10⁻² mmol) K[B(C₆F₅)₄] zugegeben. Der Reaktor wird verschlossen und 6 bar Ethen aufgedrückt, so daß das molare Verhältnis AN/E = 1,5/1 beträgt, auf 65°C erwärmt und 4 h bei dieser Temperatur polymerisiert. Ausbeute: 1,17 g. **Beispiel 11:**

### Polymerisation von Ethen/Styrol mit [(2,6-iPr₂Ph)₂PhPyr]CoCl₂/Na[B(C₆H₅)₄]/AIBN

5 ml (43 mmol) Styrol werden in 200 ml Toluol vorgelegt. Anschließend werden nacheinander 142 mg (0,9 mmol) AIBN, 6,3 mg (0,9·10⁻² mmol) der Cobaltverbindung B und 6 mg (1,8·10⁻² mmol) Na[B(C₆H₅)₄] zugegeben. Der Reaktor wird verschlossen und 2,6 bar Ethen aufgedrückt, so daß das molare Verhältnis Styrol/E = 1/1 beträgt, auf 65°C erwärmt und 4 h bei dieser Temperatur polymerisiert. Ausbeute: 0,19 g.

### Beispiel 12:

### Polymerisation von Ethen/Styrol mit [(2,6-iPr₂Ph)₂PhPyr]CoCl₂/ Na[B(C₆H₅)₄]/AIBN

5 ml (43 mmol) Styrol werden in 200 ml Toluol vorgelegt. Anschließend werden nacheinander 180 mg (1,1 mmol) AIBN, 16 mg (2,2·10⁻² mmol) der Cobaltverbindung B und 17 mg (4,9·10⁻² mmol) Na[B(C₆H₅)₄] zugegeben. Der Reaktor wird verschlossen und 5,3 bar Ethen aufgedrückt, so daß das molare Verhältnis Styrol/E = 1/2 beträgt, auf 65°C erwärmt und 4 h bei dieser Temperatur polymerisiert. Ausbeute: 0,20 g.

### Beispiel 13:

### Polymerisation von Ethen/MA mit [(2,6-iPr₂Ph)₂PhPyr]CoCl₂/ Na[B(C₆H₅)₄]/-AIBN

10 ml (112 mmol) Methylacrylat werden in 200 ml Toluol vorgelegt. Anschließend werden nacheinander 180 mg (1,1 mmol) AIBN, 8 mg (1,1·10⁻² mmol) der Cobaltverbindung B und 8,6 mg (2,5·10⁻² mmol) Na[B(C₆H₅)₄] zugegeben. Der Reaktor wird verschlossen und 3,4 bar Ethen aufgedrückt, so daß das molare Verhältnis MA/E = 2/1 beträgt, auf 65°C erwärmt und 4 h bei dieser Temperatur polymerisiert. Ausbeute: 4,10 g.

### Beispiel 14:

### Polymerisation von Ethen/MA mit [(2,6-iPr₂Ph)₂PhPyr]CoCl₂/ Na[B(C₆H₅)₄]/-AIBN

5 ml (56 mmol) Methylacrylat werden in 200 ml Toluol vorgelegt. Anschließend werden nacheinander 180 mg (1,1 mmol) AIBN, 8 mg (1,1·10⁻² mmol) der Cobaltverbindung B und 8,6 mg (2,5·10⁻² mmol) Na[B(C₆H₅)₄] zugegeben. Der Reaktor wird verschlossen und 3,4 bar Ethen aufgedrückt, so daß das molare Verhältnis MA/E = 1/1 beträgt, auf 65°C erwärmt und 4 h bei dieser Temperatur polymerisiert. Ausbeute: 1,77 g.

### Beispiel 15:

### Polymerisation von Ethen/MA mit [(2,6-iPr₂Ph)₂PhPyr]CoCl₂/ Na[B(C₆H₅)₄]/-AIBN

5 ml (56 mmol) Methylacrylat werden in 200 ml Toluol vorgelegt. Anschließend werden nacheinander 180 mg (1,1 mmol) AIBN, 8 mg (1,1·10⁻² mmol) der Cobaltverbindung B und 8,6 mg (2,5·10⁻² mmol) Na[B(C₆H₅)₄] zugegeben. Der Reaktor wird verschlossen und 5,1 bar Ethen aufgedrückt, so daß das molare Verhältnis Methylacrylat/E = 1/1,5 beträgt, auf 65°C erwärmt und 4 h bei dieser Temperatur polymerisiert. Ausbeute: 2,01 g.

### Beispiel 16:

### Radikalische Polymerisation von Methylacrylat (Vergleichsversuch)

In einem 1000ml-Glasautoklaven werden 10 ml (112 mmol) Methylacrylat in 200 ml Toluol vorgelegt. Nach Zugabe von 180 mg (1,1 mmol) AIBN wird auf 65° geheizt und 4 h bei dieser Temperatur gerührt. Ausbeute: 4,72 g.

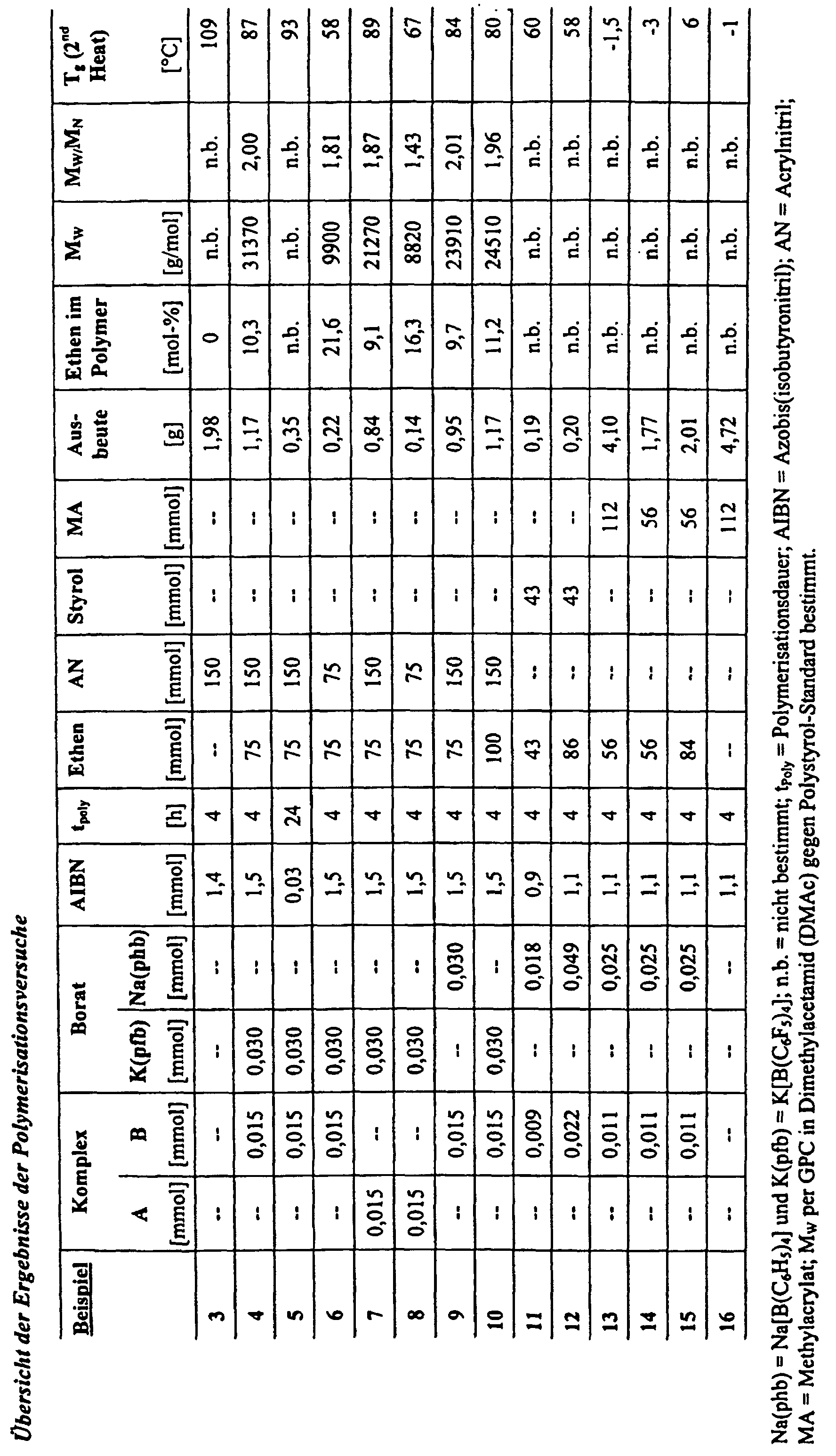

## Patentansprüche

1. Verfahren zur Cöpolymerisation von polaren Monomeren, die radikalisch polymerisierbar sind und eine mehr oder weniger stark ausgeprägte Teil-Ladungsverteilung aufweisen, und unpolaren Monomeren, die durch koordinative Polymerisation polymerisiert werden können und keine besondere Ladungstrennung im Molekül aufweisen, **dadurch gekennzeichnet, dass** mindestens ein polares und mindestens ein unpolares Monomer in Gegenwart einer oder mehrerer Übergangsmetallverbindungen der allgemeinen Formel (II)
MLₐQ_{b}, (II)
wobei
M für ein Metall der Gruppe 5-10 des Periodensystems nach IUPAC 1985,
L für einen 2-, 3- oder 4-zähnigen chelatisierenden Liganden,
Q für einen mono-anionischen oder nicht-ionischen Liganden steht und
a und b eine ganze Zahl darstellen, wobei b > 1 ist und a sich berechnet aus der (Gesamtzahl der Koordinationsstellen an M-b) / die Anzahl der Zähne des Liganden,
und einem oder mehreren Radikalbildnern und gegebenenfalls einem oder mehreren Cokatalysatoren polymerisiert werden, wobei die Menge des hinzugefügten Cokatalysators im Bereich von 0,01 bis 20 mol% bezogen auf die Gesamtkonzentration des oder der Radikalbildner liegt.

2. Verfahren nach Anspruch 1, **dadurch gekennzeichnet, dass** man die Übergangsmetallverbindungen so wählt, dass die Übergangsmetallverbindung gegebenenfalls in Gegenwart eines Cokatalysators, reversibel einen Komplex mit der radikalisch wachsenden Polymerkette bildet und in die so gebildete Bindung zwischen Übergangsmetall und Polymerkette unpolare Monomere insertiert werden.

3. Verfahren nach einem oder mehreren der Ansprüche 1 bis 2, **dadurch gekennzeichnet, dass** man den Radikalbildner so wählt, dass der oder die Radikalbildner die Polymerisation initiiert und nicht nachteilig mit der Übergangsmetallverbindung reagiert.

4. Verfahren nach einem oder mehreren der Ansprüche 1 bis 3, **dadurch gekennzeichnet, dass** man als Cokatalysator eine oder mehrere Übergangsmetallkomplex-Kation bildende Verbindungen oder Koordinationskomplex-Verbindungen einsetzt, ausgewählt aus der Gruppe der starken, neutralen Lewis-Säuren, der ionischen Verbindungen mit Lewis-sauren Kationen oder Brönstedt-sauren Kationen nicht-koordinierenden Anionen.

5. Zusammensetzung enthaltend eine oder mehrere Übergangsmetallverbindung der allgemeinen Formel (II)
MLₐQ_{b} (II)
wobei.
M für ein Metall der Gruppe 5-10 des Periodensystems nach IUPAC 1985,
L für einen 2-, 3- oder 4-zähnigen chelatisierenden Liganden,
Q für einen mono-anionischen oder nicht-ionischen Liganden steht und
a und b eine ganze Zahl darstellen, wobei b > 1 ist und a sich berechnet aus der (Gesamtzahl der Koordinationsstellen an M-b) / die Anzahl der Zähne des Liganden
und mehrere Radikalbildner und gegebenenfalls einen oder mehrere Cokatalysatoren, wobei die Menge des Cokatalysators im Bereich von 0,01 bis 20 mol % bezogen auf die Gesamtkonzentration des oder der Radikalbildner liegt.

6. Zusammensetzung nach Anspruch 5, **dadurch gekennzeichnet, dass** das Übergangsmetall ausgewählt ist aus Vanadium, Chrom, Mangan, Eisen, Cobalt, Nickel, Ruthenium, Rhodium und Palladium.

7. Zusammensetzung nach einem oder mehreren der Ansprüche 5 bis 6, **dadurch gekennzeichnet, dass** der Radikalbildner ein Peroxid, eine Diazoverbindung oder eine Mischung hieraus ist.

8. Zusammensetzung nach einem oder mehreren der Ansprüche 5 bis 7, **dadurch gekennzeichnet, dass** man als Cokatalysator eine oder mehrere Verbindungen einsetzt, ausgewählt aus der Gruppe der starken, neutralen Lewis-sauren, der ionischen Verbindungen mit Lewis-sauren Kationen oder Brönstedt-sauren Kationen und nicht-koordinierenden Anionen.

9. Zusammensetzung nach einem oder mehreren der Ansprüche 5 bis 8, **dadurch gekennzeichnet, dass** man die Übergangsmetallverbindungen so wählt, dass die Übergangsmetallverbindung, gegebenenfalls in Gegenwart eines Co-Katalysators, reversibel einem Komplex mit einer radikalisch wachsenden Polymerkette bilden kann und in die so gebildete Bindung zwischen Übergangsmetall und Polymerkette unpolare Monomere insertiert werden können.

10. Verwendung der Zusammensetzung nach einem oder mehreren der Ansprüche 5 bis 8 als Polymerisationskatalysator.

11. Auf molekularer Ebene statistiche Copolymerisate herstellbar in einem Verfahren nach einem oder mehreren der Ansprüche 1 bis 4.

## Claims

1. Process for copolymerizing polar monomers which can be polymerized by a free-radical mechanism and have a more or less strongly pronounced partial charge distribution and nonpolar monomers which can be polymerized by coordinative polymerization and have no particular charge separation in the molecule, **characterized in that** at least one polar monomer and at least one nonpolar monomer are polymerized in the presence of one or more transition metal compounds of the general formula (II)
MLₐQ_{b}, (II)
where
M is a metal of groups 5-10 of the Periodic Table in the IUPAC 1985 version,
L is a bidentate, tridentate or tetradentate chelating ligand,
Q is a monoanionic or nonionic ligand and
a and b are each an integer, where b > 1 and a is calculated from (the total number of coordination sites on M-b)/the number of sites occupied by the ligand,
and one or more free-radical formers and, if appropriate, one or more cocatalysts, with the amount of cocatalyst to be added being in the range from 0.01 to 20 mol% based on the total concentration of the free-radical former or formers.

2. Process according to Claim 1, **characterized in that** the transition metal compounds are selected so that the transition metal compound, if appropriate in the presence of a cocatalyst, reversibly forms a complex with the polymer chain growing by a free-radical mechanism and nonpolar monomers can be inserted into the resulting bond between transition metal and polymer chain.

3. Process according to one or both of Claims 1 and 2, **characterized in that** the free-radical former is selected so that the free-radical former or formers initiates the polymerization and does not react disadvantageously with the transition metal compound.

4. Process according to one or more of claims 1 to 3, **characterized in that** one or more compounds forming transition metal complex cations or coordination complex compounds selected from the group consisting of strong, uncharged Lewis acids, ionic compounds having Lewis-acid cations or Brönsted-acid cations noncoordinating anions is/are used as cocatalyt.

5. Composition comprising one or more transition metal compounds of the general formula (II)
MLₐQ_{b}, (II)
where
M is a metal of groups 5-10 of the Periodic Table in the IUPAC 1985 version,
L is a bidentate, tridentate or tetradentate chelating ligand,
Q is a monoanionic or nonionic ligand and
a and b are each an integer, where b > 1 and a is calculated from (the total number of coordination sites on M-b)/the number of sites occupied by the ligand,
and one or more free-radical formers and, if appropriate, one or more cocatalysts, with the amount of cocatalyst being in the range from 0.01 to 20 mol% based on the total concentration of the free-radical former or formers.

6. Composition according to Claim 5, **characterized in that** the transition metal is selected from among vanadium, chromium, manganese, iron, cobalt, nickel, ruthenium, rhodium and palladium.

7. Composition according to one or both of Claims 5 and 6, **characterized in that** the free-radical former is a peroxide, a diazo compound or a mixture thereof.

8. Composition according to one or more of Claims 5 to 7, **characterized in that** one or more compounds selected from the group consisting of strong, uncharged Lewis-acids, ionic compounds having Lewis-acid cations or Brönsted-acid cations and noncoordinating anions is/are used as cocatalyst.

9. Composition according to one or more of Claims 5 to 8, **characterized in that** the transition metal compounds are selected so that the transition metal compound, if appropriate in the presence of a cocatalyst, can reversibly form a complex with a polymer chain growing by a free-radical mechanism and nonpolar monomers can be inserted into the resulting bond between transition metal and polymer chain.

10. Use of the composition according to one or more of Claims 5 to 8 as polymerization catalyst.

11. Copolymers which are random on a molecular level and can be prepared by a process according to one or more of Claims 1 to 4.

## Revendications

1. Procédé de copolymérisation de monomères polaires, qui sont polymérisables de manière radicalaire et qui présentent une ou plusieurs parties de distribution de charge, plus ou moins fortement marquées, et de monomères non polaires, qui peuvent être polymérisés par polymérisation par coordination et qui ne présentent aucune séparation de charge particulière dans la molécule, **caractérisé en ce que** l'on polymérise au moins un monomère polaire et au moins un monomère non polaire en présence d'un ou de plusieurs composés de métal de transition de la formule générale (II) :
MLₐQ_{b} (II)
dans laquelle :
M représente un métal des groupes 5-10 du système périodique selon IUPAC 1985,
L représente un ligand chélatant à 2, 3 ou 4 dents,
Q représente un ligand mono-anionique ou non ionique, et
a et b représentent un nombre entier, où b > 1 et a se calcule par (nombre total de sites de coordination sur M-b)/nombre de dents du ligand,
et un ou plusieurs agents formant des radicaux et le cas échéant, un ou plusieurs cocatalyseurs, où la quantité de cocatalyseur ajoutée se situe dans l'intervalle allant de 0,01 à 20% en moles, sur base de la concentration totale en le ou les agents formant des radicaux.

2. Procédé selon la revendication 1, **caractérisé en ce que** l'on choisit les composés de métal de transition de sorte que le composé de métal de transition forme, le cas échéant en présence d'un cocatalyseur, de manière réversible, un complexe avec la chaîne polymère radicalaire en croissance et **en ce que** dans la liaison ainsi formée, entre le métal de transition et la chaîne polymère, sont insérés les monomères non polaires.

3. Procédé selon l'une ou plusieurs des revendications 1 à 2, **caractérisé en ce que** l'on choisit l'agent formant des radicaux de sorte que le ou les agents formant des radicaux initient la polymérisation et ne réagissent pas défavorablement avec le composé de métal de transition.

4. Procédé selon l'une ou plusieurs des revendications 1 à 3, **caractérisé en ce que** l'on met en oeuvre comme cocatalyseur, un ou plusieurs composés formant complexe de métal de transition-cation ou composés-complexes de coordination, choisis parmi le groupe des acides de Lewis forts, neutres, des composés ioniques avec des cations acide de Lewis ou des cations acide de Brönstedt et des anions non coordinants.

5. Composition contenant un ou plusieurs composé de métal de transition de la formule générale (II) :
MLₐQ_{b} (II)
dans laquelle :
M représente un métal des groupes 5-10 du système périodique selon IUPAC 1985,
L représente un ligand chélatant à 2, 3 ou 4 dents,
Q représente un ligand mono-anionique ou non ionique, et
a et b représentent un nombre entier, où b > 1 et a se calcule par (nombre total de sites de coordination sur M-b)/nombre de dents du ligand,
et plusieurs agents formant des radicaux et le cas échéant, un ou plusieurs cocatalyseurs, où la quantité de cocatalyseur se situe dans l'intervalle allant de 0,01 à 20% en moles, sur base de la concentration totale en le ou les agents formant des radicaux.

6. Composition selon la revendication 5, **caractérisée en ce que** le métal de transition est choisi parmi le vanadium, le chrome, le manganèse, le fer, le cobalt, le nickel, le ruthénium, le rhodium et le palladium.

7. Composition selon l'une ou plusieurs des revendications 5 à 6, **caractérisée en ce que** l'agent formant des radicaux est un peroxyde, un composé diazo ou un mélange de ceux-ci.

8. Composition selon l'une ou plusieurs des revendications 5 à 7, **caractérisée en ce que** l'on met en oeuvre comme cocatalyseur, un ou plusieurs composés choisis parmi le groupe des acides de Lewis forts, neutres, des composés ioniques avec des cations acide de Lewis ou des cations acide de Brönstedt et des anions non coordinants.

9. Composition selon l'une ou plusieurs des revendications 5 à 8, **caractérisée en ce que** l'on choisit les composés de métal de transition de sorte que le composé de métal de transition forme, le cas échéant en présence d'un cocatalyseur, de manière réversible, un complexe avec la chaîne polymère radicalaire en croissance et **en ce que** dans la liaison ainsi formée, entre le métal de transition et la chaîne polymère, sont insérés les monomères non polaires.

10. Utilisation de la composition selon l'une ou plusieurs des revendications 5 à 8, comme catalyseur de polymérisation.

11. Copolymère statistique sur le plan moléculaire, pouvant être préparé dans un procédé selon l'une ou plusieurs des revendications 1 à 4.
